Europäisches Patentamt

**European Patent Office**

Office européen des brevets

(11) Numéro de publication : **0 183 707**
**B1**

(12) **FASCICULE DE BREVET EUROPÉEN**

(45) Date de publication du fascicule du brevet :
**09.11.88**

(21) Numéro de dépôt : **85901457.3**

(22) Date de dépôt : **08.03.85**

(86) Numéro de dépôt international :
**PCT/FR 85/00047**

(87) Numéro de publication internationale :
**WO/8504121 (26.09.85 Gazette 85/21)**

(51) Int. Cl.⁴ : **B 05 D 1/08**

(54) **TRAITEMENT DE SURFACE D'UNE PIECE POUR AMELIORER L'ADHERENCE D'UN REVETEMENT DEPOSE ENSUITE SUR LA PIECE, PAR PROJECTION A CHAUD.**

(30) Priorité : **12.03.84 FR 8403749**
**12.03.84 FR 8403750**

(43) Date de publication de la demande :
**11.06.86 Bulletin 86/24**

(45) Mention de la délivrance du brevet :
**09.11.88 Bulletin 88/45**

(84) Etats contractants désignés :
**BE CH DE GB LI NL SE**

(56) Documents cités :
**DE-B- 2 615 022**
**FR-A- 1 379 044**
**US-A- 3 325 303**
**Chemical Abstracts, volume 74, No.4 , 25 January 1971, Columbus, Ohio (US) Kentaro Kiyozumi et al.: "Surface treatment of plastics by plasmajet", page 19 abrégé 13712m**

(73) Titulaire : **COMMISSARIAT A L'ENERGIE ATOMIQUE**
**31/33, rue de la Fédération**
**F-75015 Paris (FR)**

(72) Inventeur : **BONCOEUR, Marcel**
**22, rue Marsoulan**
**F-75012 Paris (FR)**
Inventeur : **HANSZ, Bernard**
**28, rue Marcel Charon**
**F-91710 Vert-le-Petit (FR)**

(74) Mandataire : **Mongrédien, André et al**
**c/o BREVATOME 25, rue de Ponthieu**
**F-75008 Paris (FR)**

## Description

La présente invention a pour objet un procédé de revêtement de la surface d'une pièce en matériau sensible à la chaleur tel qu'un matériau composite, qui comporte une étape préliminaire d'activation de la surface de la pièce destinée à être revêtue d'un matériau tel qu'une matière céramique.

Elle s'applique en particulier à la réalisation de pièces en matériau composite revêtues d'un matériau réfractaire.

On connaît par le brevet allemand DE-A-2 615 022 un procédé du type énoncé dans le préambule des revendications indépendantes 1 et 2 et qui permet de revêtir la surface d'une pièce par projection au plasma au moyen d'un jet de gaz chauffé ionisé et de matière fondue dans lequel on réalise immédiatement un refroidissement de la pièce revêtue au moyen d'un jet de gaz liquéfié tel que le dioxyde de carbone.

Cependant, dans un tel procédé, l'emploi de pièces en matériau sensible à la chaleur, par exemple en matériau composite comme les matériaux constitués par des matières plastiques renforcées par des fibres inorganiques telles que les fibres de verre, de carbone, de silice ou de graphite, pose certains problèmes lorsqu'on veut les munir d'un revêtement adhérent, réalisé par exemple en céramique.

En effet, dans les matériaux composites à base de matière plastique renforcée par des fibres inorganiques, les points d'ancrage du revêtement sont surtout constitués par les microfissures formées dans la résine au niveau des fibres, et ceci ne permet pas l'obtention d'une bonne adhérence entre le matériau composite et la couche de matériau de revêtement.

On connaît par le document Chemical Abstract, Vol. 74 (1971), n° 13712m, un procédé de traitement de surface d'un matériau sensible à la chaleur, constitué par du polyéthylène, qui consiste à traiter la surface au moyen d'un jet de plasma en présence d'air, ce qui permet d'accroître la force d'adhérence du polyéthylène sur des adhésifs à base de résines époxyde.

On connaît également par le brevet FR-A-1 379 044 un procédé de revêtement d'objets en matière organique combustible par projection à haute température d'oxyde réfractaire, qui consiste à soumettre tout d'abord la surface de l'objet à un nettoyage, à déposer ensuite sur la surface nettoyée un film mince de résine thermodurcissable, à déposer sur la résine des particules d'un corps réfractaire, à polymériser la résine, à éliminer les grains de corps réfractaire dont l'adhérence sur la surface n'est pas suffisante et à déposer le revêtement sur la surface ainsi traitée par projection à chaud à l'aide d'un pistolet à flamme ou d'un dispositif à plasma. Ces traitements préliminaires permettent en particulier de faciliter l'accrochage du revêtement sur l'objet en matière organique, car on crée, dans ce procédé, une couche intermédiaire de grains réfractaires qui adhèrent au support par l'intermédiaire de la résine.

Ainsi, ce procédé a l'inconvénient de nécessiter la mise en place d'une couche intermédiaire de grains réfractaires.

La présente invention a précisément pour objet un procédé de revêtement d'une pièce en matériau sensible à la chaleur, par exemple en matériau composite, par projection à chaud de métal ou de matière céramique, qui comporte une étape préalable de traitement de la surface permettant justement de modifier l'état de surface de la pièce et d'obtenir ensuite un revêtement adhérent.

Le procédé selon l'invention de revêtement d'une pièce en matériau sensible à la chaleur par projection à chaud de métal ou de matière céramique, se caractérise en ce que l'on soumet la surface de la pièce en atmosphère inerte à l'action d'un plasma d'arc gazeux chaud, on refroidit immédiatement la surface ainsi traitée en projetant sur celle-ci un gaz liquéfié sous forme de gouttelettes au moyen d'un gaz porteur, et on projette ensuite à chaud sur la pièce le métal ou la matière céramique.

Selon une variante de ce procédé dans laquelle on dépose tout d'abord sur la surface de la pièce une couche de résine, la couche de résine est une couche de matière thermoplastique et on effectue sur la couche de matière thermoplastique ainsi déposée un traitement consistant à soumettre la surface de la couche en atmosphère inerte à l'action d'un plasma d'arc gazeux chaud et à refroidir immédiatement la surface ainsi traitée en projetant sur celle-ci un gaz liquéfié sous forme de gouttelettes au moyen d'un gaz porteur, on projette ensuite à chaud le métal ou la matière céramique sur la surface de la pièce munie de la couche ainsi traitée et on refroidit immédiatement la surface de la pièce ainsi revêtue.

Généralement, le gaz du plasma est de l'azote, de l'argon, de l'hydrogène, de l'hélium ou un mélange de ceux-ci avec parfois introduction de traces de gaz réactifs (eau, $BCl_3$, etc...) pour accélérer la création de sites actifs.

Pour réaliser ce traitement de surface, on peut utiliser un pistolet de projection à plasma d'un type classique, comprenant par exemple une anode ayant sensiblement la forme d'un cylindre creux, une cathode disposée sensiblement concentriquement à l'anode et des moyens pour amener un gaz ou mélange gazeux dans l'espace compris entre l'anode et la cathode afin d'y créer un jet de plasma.

En soumettant selon l'invention la surface de la pièce à un plasma gazeux chaud, on chauffe celle-ci sous l'effet du rayonnement infrarouge, et on la décape également sous l'effet du bombardement par des ions énergiques, ce qui permet d'arracher, d'une part, les atomes de gaz solidement adsorbés sur la surface de la pièce et de créer, d'autre part, des sites actifs en vue de l'accrochage du revêtement. Par ailleurs, le rayonnement ultraviolet du plasma gazeux permet de réaliser une réticulation finale du matériau constituant la pièce, lorsque celle-ci est en matière plastique. Lorsque la pièce est en matériau composite et comporte une matrice de matière plastique renforcée par des fibres inorganiques, on suppose qu'il se produit une activation des atomes de carbone de la matrice de matière plastique affleurant à la surface de la pièce.

Pour la réalisation du traitement de surface au moyen du plasma gazeux, on dispose généralement la pièce dans une enceinte étanche balayée par un gaz inerte tel que l'argon, puis on dirige un plasma gazeux sur la pièce en utilisant un pistolet à plasma. L'intensité d'alimentation de l'arc du plasma est généralement de 400 à 800 A et l'on introduit dans le pistolet le gaz constitué par exemple par un mélange d'argon et d'azote sous une pression de 0,1 à 0,2 MPa. Généralement, on déplace le pistolet le long de la surface de la pièce pour traiter la totalité de celle-ci et l'on peut effectuer plusieurs cycles de traitement si nécessaire.

On réalise simultanément un refroidissement énergique de la surface traitée. Ceci peut être effectué en projetant sur la pièce un liquide de refroidissement se trouvant à une température proche de sa température de saturation. Ce dernier est un gaz liquéfié tel que l'azote ou l'argon. La température de saturation d'un liquide est définie comme étant la température à laquelle la vapeur contenue en solution dans le liquide se dégage : la température de saturation est généralement proche de la température d'ébullition, mais différente de celle-ci, surtout dans le cas des gaz liquéfiés.

Selon l'invention, on projette le liquide de refroidissement sous forme de gouttelettes. Afin de créer cette sorte de brouillard sur la pièce, on utilise au moins un gaz porteur pour projeter le liquide de refroidissement. Dans ce cas, on règle le débit et la pression du liquide de refroidissement et du gaz porteur pour que les gouttelettes de liquide aient un diamètre inférieur ou égal à 40 microns. D'autre part, il peut s'avérer nécessaire d'opérer sous atmosphère contrôlée.

Lorsque dans la variante du procédé de l'invention, le traitement par plasma d'arc gazeux est effectué sur la couche de matière thermoplastique déposée sur la pièce, ce traitement permet également d'obtenir une meilleure adhérence du revêtement déposé ensuite sur la pièce. Par ailleurs, il permet de sécher la couche de matière thermoplastique et d'éliminer ainsi toute trace de solvant.

Dans la variante de l'invention, on réalise avantageusement le refroidissement de la surface de la pièce revêtue en utilisant le mode de refroidissement décrit ci-dessus.

Grâce à la mise en place d'une couche de matière thermoplastique sur la pièce à revêtir, on obtient une adhérence élevée du matériau de revêtement. En effet, lors de la projection à chaud de ce matériau, la matière thermoplastique se ramollit et les particules du matériau de revêtement sont enchâssées dans la couche de matière thermoplastique, ce qui permet d'obtenir ainsi un bon ancrage du revêtement. Par ailleurs, cette couche de matière thermoplastique a de bonnes caractéristiques de vieillissement et elle ne se dégrade pas au contact de la vapeur d'eau ou sous l'action de rayonnements tels que les rayonnements ultra-violets, infra-rouges, etc.

Généralement, pour permettre un bon ancrage du matériau de revêtement, la couche de matière thermoplastique déposée sur la pièce a une épaisseur de 20 à 500 μm.

Généralement, la projection à chaud a lieu en atmosphère contrôlée, par exemple sous atmosphère d'argon. La présence de cette atmosphère contrôlée lors du dépôt et le refroidissement rapide de la pièce revêtue permettent d'éviter tout brûlage de la sous couche de matière thermoplastique.

Selon l'invention, la matière thermo-plastique utilisée est choisie de façon à présenter une bonne compatibilité, d'une part, avec le matériau constituant la pièce et, d'autre part, avec le matériau de revêtement, tout en ayant également une stabilité thermique suffisante pour supporter la température utilisée lors de la projection à chaud du matériau de revêtement.

A titre d'exemples de matières thermoplastiques susceptibles d'être utilisées, on peut citer le polystyrène, les polycarbonates, les polyéthers et les polyoléfines telles que le polyéthylène. Le matériau constituant la pièce à revêtir peut être un matériau composite, une matière plastique, du bois, un métal, un alliage ou un matériau céramique. Généralement, les pièces à revêtir sont en matériau composite constitué par exemple par une matière plastique renforcée par des fibres inorganiques telles que les fibres de verre, de carbone, de silice ou de graphite. La pièce peut également être réalisée en matériau composite formé à partir des mêmes fibres inorganiques.

Le procédé de l'invention s'applique en particulier à la réalisation de pièces revêtues de matériaux métalliques et/ou de matériaux réfractaires tels que des oxydes, par exemple l'oxyde de chrome ou l'alumine, des carbures, des nitrures, par exemple le nitrure de silicium, des siliciures et des borures.

Généralement, on dépose la couche de matière thermoplastique sur la surface de la pièce en projetant sur celle-ci une solution de la matière thermoplastique dans un solvant et en soumettant ensuite la couche ainsi déposée à un séchage pour éliminer le solvant. Ce séchage peut être réalisé à la température ambiante, et il est généralement suivi d'un étuvage, à une température inférieure à 100 °C, sous vide, afin d'éliminer les traces de solvant qui pourraient être emprisonnées dans la couche de matière thermoplastique déposée.

De préférence, selon l'invention, on soumet tout d'abord la pièce à un traitement de nettoyage avant d'effectuer le traitement de surface au moyen du plasma gazeux et/ou le dépôt de la couche de matière thermoplastique.

Ce traitement de nettoyage peut comprendre un dégraissage et/ou un sablage. Le traitement de dégraissage peut être effectué en utilisant des solvants organiques tels que des alcools comme l'isopropanol. Ce traitement permet d'enlever, d'une part, les graisses qui ont pu se déposer sur la surface de la pièce lors des manipulations de celle-ci et d'ôter, d'autre part, les poussières accumulées provenant, par exemple, des opérations d'usinage.

Le traitement de sablage est effectué en projetant des particules abrasives sur la surface de la pièce. Généralement, on utilise des particules ayant des dimensions de 125 à 250 μm, constituées par exemple de corindon, et on réalise la projection de particules sous une pression de 0,2 à 0,3 MPa.

Ce traitement permet de créer une rugosité de surface propice à l'accrochage d'un revêtement. Par ailleurs, lorsque la pièce est en matière plastique renforcée par des fibres inorganiques, le sablage conduit à une ablation de la matière plastique recouvrant les fibres, ce qui est avantageux car, dans ce cas, les fibres jouent un rôle prépondérant dans l'adhérence du revêtement. Cependant, ce sablage ne doit pas être réalisé dans des conditions trop sévères car sinon il se produirait une rupture des fibres et une dégradation de la pièce.

Généralement, après l'opération de dégraissage, on soumet la pièce à un étuvage pour éliminer les solvants tels que l'alcool, utilisé pour le dégraissage et l'eau retenue dans les pores de la pièce.

Ce traitement d'étuvage peut être réalisé à une température de 50 à 70 °C sous vide primaire soit sous une pression inférieure à 26,66 Pa pendant environ 2 à 12 h.

Après cet étuvage, on peut réaliser si nécessaire l'opération de sablage.

Selon un mode préféré de mise en œuvre du procédé de l'invention, le prétraitement comporte une première étape de microsablage suivie de trois étapes de lavage réalisées respectivement avec de l'eau permutée, puis de l'acétone, puis de l'isopropanol et une dernière étape consistant en un étuvage.

Le microsablage réalisé dans des conditions relativement douces provoque un décapage léger de la surface de la pièce et une microfissuration de la matrice de résine lorsque la pièce est en matière plastique renforcée par des fibres inorganiques.

Le lavage à l'eau permutée a pour mission d'enlever des ions tels que $Na^+$, $F^-$... susceptibles de nuire à l'adhérence de la couche de matière thermoplastique ; il permet, par ailleurs, également d'ôter les poussières déposées sur la pièce et les fibriles arrachées des torons dans le cas de pièces en matériau renforcé par des fibres.

Le lavage à l'acétone permet d'éliminer l'eau et d'éviter ainsi une hydrolyse éventuelle de la matière thermoplastique ; par ailleurs, l'acétone solubilise les impuretés organiques présentes à la surface de la pièce.

Le lavage à l'isopropanol parachève le dégraissage et permet d'éviter que l'acétone ne séjourne dans les porosités de la pièce, ce qui pourrait provoquer à la longue une attaque de la matrice de résine lorsque la pièce est en résine renforcée par des fibres.

L'étuvage permet d'enlever l'isopropanol et l'eau retenue dans les pores de la pièce.

Le procédé de l'invention s'applique en particulier au traitement de pièces en matériau composite, constitué notamment par une matière plastique renforcée par des fibres inorganiques telles que les fibres de verre, les fibres de carbone, les fibres de silice et les fibres de graphite. A titre d'exemple de tels matériaux, on peut citer les matériaux composites à base de résine époxyde renforcée par des fibres de verre.

Cependant, ce procédé peut s'appliquer également au traitement de pièces en matière plastique pure ou même de pièces métalliques.

Les pièces traitées par le procédé de l'invention peuvent ensuite être revêtues d'un matériau approprié, par exemple d'une couche de matériau céramique ou de métal. Dans ce cas, on réalise tout d'abord un traitement de surface de la pièce en utilisant le procédé de l'invention, puis on projette immédiatement sur la surface de la pièce le matériau céramique ou métallique en utilisant par exemple un pistolet à plasma et le système de refroidissement décrit.

Les matériaux céramiques susceptibles d'être utilisés sont les composés réfractaires tels que oxydes, carbures, nitrures, siliciures, ... Les matériaux métalliques sont l'aluminium, le tungstène, le nickel, ...

Les pièces revêtues obtenues par le procédé de l'invention peuvent être utilisées dans divers domaines qui dépendent en particulier de la nature du matériau de revêtement et du matériau constituant la pièce. Ainsi, le procédé de l'invention peut s'appliquer notamment à la réalisation de contacts électriques, de protections thermiques, de meules d'usinage, de pièces de frottement, de collecteurs à balai pour l'électroménager et d'axes de roulement réalisés par exemple en matériau composite revêtu d'oxyde de chrome.

D'autres caractéristiques et avantages de l'invention apparaîtront mieux à la lecture de la description qui suit d'exemples de mise en œuvre du procédé de l'invention, donnés bien entendu à titre illustratif et non limitatif, en référence aux dessins annexés sur lesquels :

— la figure 1 représente schématiquement en coupe verticale une installation pour la mise en œuvre du procédé de l'invention,

— la figure 2 est une vue schématique en coupe du pistolet de projection de plasma utilisé dans l'installation de la figure 1,

— la figure 3 est une vue schématique du système de refroidissement utilisé dans l'invention, et

— la figure 4 est une vue schématique en coupe verticale d'un distributeur de poudre qui peut être associé au pistolet à plasma pour réaliser ensuite le revêtement de la pièce traitée par le procédé de l'invention.

On décrit tout d'abord la mise en œuvre du traitement de surface par plasma d'arc gazeux de

4

l'invention sur des pièces en résine époxyde renforcée par des fibres de verre et le revêtement des pièces ainsi traitées par du carbure de bore.

On soumet tout d'abord les pièces à un traitement de dégraissage réalisé au moyen d'isopropanol. Dans ce but, on mouille les pièces avec de l'isopropanol, puis on les frotte à l'aide d'une brosse à poils de nylon afin d'enlever la poussière des rainures et on effectue ensuite un rinçage à l'isopropanol.

On soumet ensuite la pièce dégraissée à un traitement d'étuvage réalisé pendant 10 h à 50 °C sous un vide d'environ 13,33 Pa, puis à un traitement de microsablage effectué avec des particules de corindon d'une granulométrie de 200 μm, qui sont projetées sur la pièce sous une pression de 0,25 MPa. Si l'on pèse les pièces avant et après cette opération de microsablage, on constate une très légère perte de poids.

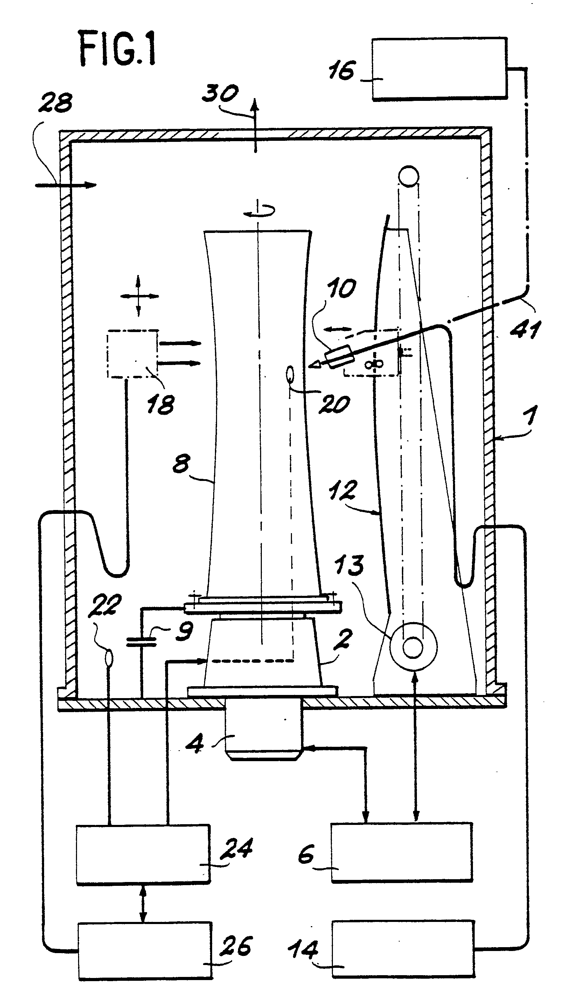

On introduit ensuite la pièce dans une boîte à gants mise sous balayage d'argon pour réaliser le traitement de surface au moyen du plasma d'arc gazeux. Ceci peut être effectué dans l'installation représentée sur la figure 1.

Sur la figure 1, on voit que cette installation se compose essentiellement d'une enceinte étanche 1 à l'intérieur de laquelle la pièce à traiter 8 repose sur un support 2 mobile en rotation autour d'un axe vertical grâce à un moteur 4. Dans le cas particulier décrit ici, la pièce à traiter 8 présente une symétrie de révolution et elle est disposée sur le support 2 de sorte que son axe de symétrie soit confondu avec l'axe de rotation de ce support. La projection de plasma est effectuée grâce à un pistolet 10 mobile le long d'un gabarit 12 grâce à un mécanisme d'entraînement 13.

Un dispositif de synchronisation 6 placé à l'extérieur de l'enceinte 1 contrôle à la fois les mouvements du pistolet 10 et du moteur 4 afin que la combinaison de la rotation de la pièce 8 autour de son axe et des déplacements du pistolet le long du gabarit 12 permette d'effectuer le traitement de toute la surface de la pièce 8. Le pistolet 10 est relié à un pupitre de contrôle de plasma 14. Comme on le verra plus loin, il peut aussi être relié à un distributeur de poudre 16 par un tuyau 41, en vue d'être utilisé également pour la réalisation d'un revêtement sur la pièce qui a été soumise au traitement de surface de l'invention.

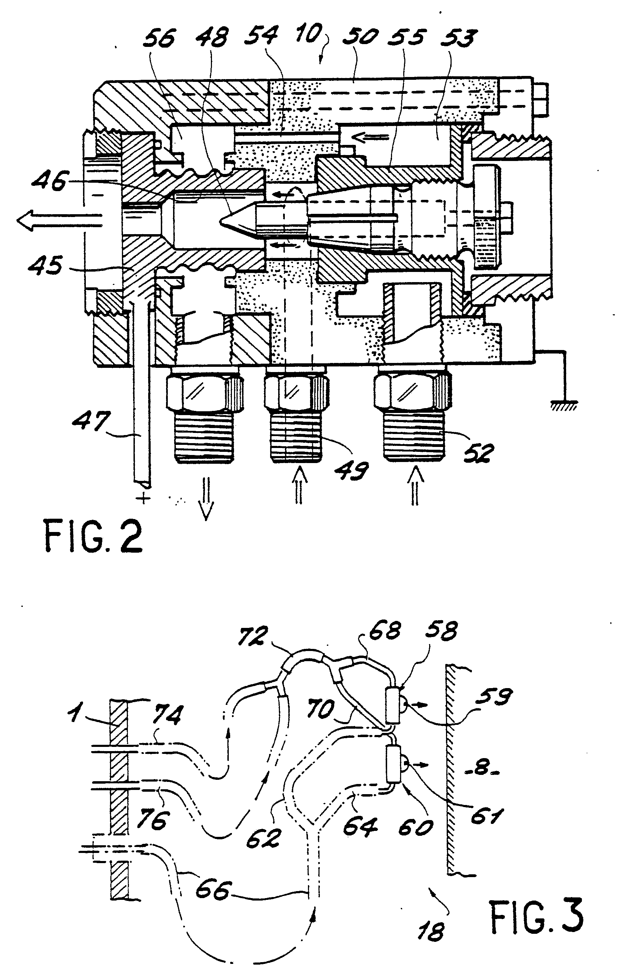

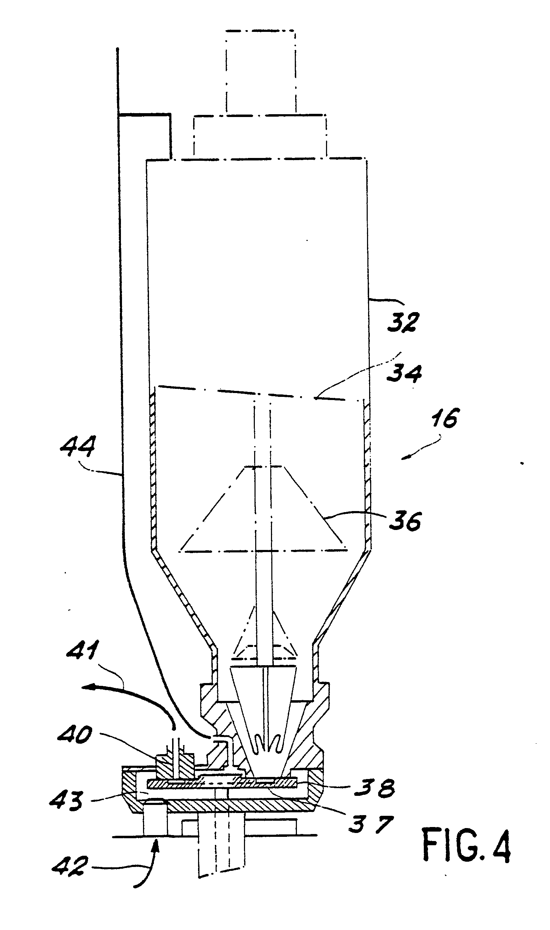

Le pupitre 14 permet de contrôler l'arrivée sur le pistolet des gaz nécessaires à la réalisation du plasma, c'est-à-dire, dans le cas particulier décrit ici, de l'argon et de l'azote, ainsi que de l'eau nécessaire à son refroidissement. Le pistolet 10 et le distributeur de poudre 16 seront décrits plus en détail ci-après en référence aux figures 2 et 4.

On voit encore sur la figure 1 le système de refroidissement 18 utilisé pour refroidir la pièce 8 dans la zone où est effectué le traitement de surface ou la projection. Ce système se trouve à la même hauteur que le pistolet 10 par rapport à la pièce 8, et il est également mobile le long de cette pièce grâce au dispositif de synchronisation 6. Le système de refroidissement 18 fera l'objet d'une description plus détaillée ci-dessous en référence à la figure 3.

Afin de régler au mieux les paramètres de fonctionnement du système de refroidissement 18 et l'état de l'atmosphère régnant dans l'enceinte 1, on a prévu un certain nombre de capteurs de température pour connaître la température de la pièce 8 et de l'atmosphère régnant dans l'enceinte. On a représenté schématiquement sur la figure un capteur 20 à l'intérieur de la pièce et un capteur 22 dans l'enceinte 1 reliés à un dispositif de contrôle 24, lequel permet de réagir sur les paramètres de fonctionnement du système 18 grâce à un dispositif de commande 26.

D'autre part, pour régler la composition de l'atmosphère régnant dans l'enceinte 1, on a prévu un balayage de celle-ci à l'aide d'un gaz neutre, par exemple de l'argon, ainsi qu'un clapet taré permettant l'évacuation des gaz contenus dans l'enceinte si la pression devient supérieure à une valeur prédéterminée. L'introduction du gaz de balayage dans l'enceinte est symbolisée par la flèche 28 et l'extraction du gaz en cas de suppression par la flèche 30.

On analyse constamment la composition du gaz contenu dans l'enceinte et on ajuste les conditions de balayage en fonction des résultats de l'analyse : en effet, la projection de plasma elle-même et le refroidissement de la pièce 8 à l'aide du système 18 introduisent dans l'enceinte 1 des gaz qu'il faut évacuer. C'est pourquoi on contrôle constamment la pression et la composition de l'atmosphère régnant dans celle-ci pour régler le débit de balayage en conséquence. Il se peut même éventuellement qu'on arrête le balayage si la composition reste dans les normes prescrites et si la pression reste inférieure à la valeur limite prédéterminée.

Ainsi, le fait qu'on contrôle l'atmosphère régnant dans l'enceinte permet d'utiliser des pièces en matériaux très actifs chimiquement puisque l'opération se déroule sous atmosphère neutre, tandis que le fait de refroidir avec des gouttelettes d'un gaz liquéfié permet un refroidissement très efficace et donc d'utiliser des matériaux instables au-delà d'une température relativement faible, de l'ordre de 100 °C. En effet, l'utilisation d'un liquide cryogénique, par exemple un gaz liquéfié comme l'hélium, l'azote ou l'argon, permet de maintenir la température de la pièce à une valeur inférieure à 50 °C.

Enfin, étant donné que la création d'un jet de plasma provoque la formation d'un champ électromagnétique très intense dans l'enceinte 1, on a prévu de protéger tous les appareils se trouvant à l'intérieur de celle-ci en les reliant à la masse par des condensateurs : on voit sur la figure 1 le condensateur 9 qui relie le support 2 à la masse métallique constituée par la paroi inférieure de l'enceinte 1, mais tous les autres éléments, en particulier le pistolet 10 et le système de refroidissement 18, sont également protégés par des condensateurs.

Eventuellement, on peut prévoir un passage tournant dans le support 2 pour le passage des fils nécessaires au fonctionnement des différents appareils. D'autres aménagements peuvent utilement être prévus, comme des hublots d'observation, mais ceux-ci doivent être imperméables aux rayons ultraviolets, et une isolation phonique à cause du bruit important provoqué par la création du jet de plasma.

Le pistolet à plasma 10 apparaît mieux sur la vue en coupe de la figure 2, où l'on voit qu'il se compose essentiellement d'une anode 45 reliée à une source de courant (non représentée) par un fil 47, cette anode présentant une symétrie de révolution et ayant sensiblement la forme d'un cylindre creux. Un passage 46 est prévu sensiblement suivant l'axe de symétrie de cette anode et la cathode 48 est disposée à l'intérieur de cet espace. L'anode et la cathode sont entourées d'une enveloppe externe 50 ayant une forme et des dimensions telles que soit ménagé un passage pour l'eau de refroidissement entre l'anode et la cathode d'une part et l'enveloppe externe d'autre part. On voit encore sur la figure le raccord 49 où aboutit le tuyau amenant le mélange de gaz nécessaire à la création du plasma. Dans le mode particulier de réalisation décrit ici, la cathode est en tungstène, et l'anode 45 est en cuivre recouverte intérieurement de rhénium dans l'espace 46, la couche de rhénium assurant la protection thermique de l'anode.

Etant donné le fort dégagement de chaleur provoqué par la décharge électrique entre l'anode et la cathode pour la création du plasma, un refroidissement énergique du pistolet est nécessaire. Pour cela, on a prévu une circulation d'eau, celle-ci pénétrant dans le pistolet par un raccord 52 et circulant d'abord dans une chambre 53 entourant le support 55 de la cathode, puis dans un conduit 54 et arrivant dans une chambre 56 entourant l'anode. Cette dernière doit être suffisamment refroidie pour obtenir un bon écoulement du plasma hors de l'espace 46. Pour cela, on effectue le refroidissement avec une eau dont la température est inférieure à 10 °C et de préférence inférieure à 8 °C, tandis que les dimensions de la chambre 56 sont prévues suffisamment faibles pour que l'eau puisse s'écouler rapidement autour de l'anode et évacuer les calories produites avec un maximum d'efficacité.

La figure 3 montre le système de refroidissement 18 utilisé pour maintenir à un niveau très bas la température de la pièce dans la zone où est effectué le traitement de surface. On voit sur la figure deux buses 58 et 60 avec des orifices 59 et 61 respectivement pour la sortie des gouttelettes de gaz liquéfié. Les buses 58 et 60 sont reliées par deux canalisations 62 et 64 à une canalisation commune 66 qui les met en communication avec un réservoir de gaz liquéfié, par exemple de l'argon liquide, disposé à l'extérieur de l'enceinte 1 et non représenté sur la figure.

Pour réaliser la formation de gouttelettes, il est nécessaire d'entraîner le gaz liquéfié à l'aide d'un autre gaz sous pression, dit « gaz porteur ». Eventuellement, on peut prévoir de mélanger le gaz porteur avec un autre gaz pour régler la tension superficielle des gouttelettes de gaz liquéfié et obtenir un meilleur refroidissement lorsque celles-ci se déposent sur la pièce 8. On voit sur la figure que les buses 58 et 60 sont reliées par des canalisations 68 et 70 respectivement à un tuyau 72 permettant le passage du mélange de gaz porteurs. C'est ainsi qu'on peut prévoir, par exemple, un réservoir d'argon et un réservoir d'hélium gazeux disposés à l'extérieur de l'enceinte 1 et reliés au tuyau 72 par des canalisations 74 et 76 respectivement.

Il est essentiel de contrôler soigneusement la pression et le débit du gaz liquéfié et du gaz porteur pour que le refroidissement se fasse dans les meilleures conditions. On obtient les meilleurs résultats lorsque les gouttelettes de gaz liquéfié sont sphériques et ont un diamètre inférieur ou égal à 40 microns. D'autre part, pour éviter que ces gouttes ne se réchauffent au contact de l'un des gaz présents dans l'enceinte ou ne réagissent avec lui, la distance de parcours doit être suffisamment faible : la distance entre l'orifice de sortie 59 de la buse 58 et la pièce 8 doit être constante et comprise entre 5 et 100 mm et, de préférence, entre 5 et 50 mm. L'agencement du dispositif est tel que cette distance ne varie pas lorsque le système de refroidissement se déplace par rapport à la pièce 8. Enfin, le gaz liquéfié doit se présenter sous forme monophasique à son entrée dans la buse, c'est-à-dire non mélangé avec sa vapeur : ce résultat est obtenu par un choix convenable des dimensions de la canalisation d'arrivée du gaz liquéfié. Dans le cas particulier décrit ici, les canalisations telles que 62, 64 et 66 sont des canalisations à double enveloppe, c'est-à-dire constituées de deux tuyaux concentriques entre lesquels on a fait le vide pour assurer une bonne isolation. Si la pression du gaz liquéfié est comprise entre 0,1 et 0,15 MPa, la distance parcourue par le liquide entre le réservoir et la buse doit être inférieure à 5 mètres et le diamètre de passage inférieur à 12 mm.

Dans l'exemple donné ici, le traitement de surface par plasma de la pièce en résine époxyde renforcée par des fibres de verre est réalisé dans les conditions suivantes :

— alimentation en mélange Argon-Azote : 6 l d'argon sous une pression de 0,22 MPa pour 1,5 à 2 l d'azote sous une pression de 0,16 MPa,
— intensité d'alimentation de l'arc créé entre l'anode 45 et la cathode 48 : 700 à 740 A,
— distance entre le pistolet 10 et la pièce 8 : 115 mm,
— vitesse de déplacement du pistolet 10 : 12 cm/min.

Après le traitement de surface au plasma, on refroidit immédiatement la pièce 8 au moyen du système de refroidissement 18, et on réalise de nouveau six cycles complets comportant un traitement de surface au moyen du pistolet à plasma réalisé dans les mêmes conditions, suivi d'un refroidissement.

Après ce traitement, on forme un revêtement de carbure de bore sur la pièce par projection au moyen

**0 183 707**

d'un pistolet à plasma. On peut réaliser cette opération dans l'installation représentée sur la figure 1, à condition d'associer au pistolet 10 le distributeur de poudre 16 illustré en détail sur la figure 4.

Sur cette figure 4, on voit que le distributeur de poudre 16 se compose essentiellement d'un récipient cylindrique 32 dans lequel est stockée la masse de poudre 34 tandis qu'un cône 36, dont l'axe est confondu avec celui du récipient 32, permet un écoulement régulier de la poudre. Celle-ci tombe à la partie inférieure du dispositif dans une rainure annulaire 37 ménagée sur un plateau 38 mobile en rotation, ce qui l'entraîne jusqu'à un raccord 40 permettant le raccordement d'un tuyau 41 dont l'autre extrémité est branchée sur le pistolet 10. L'entraînement de la poudre est assuré par un gaz, par exemple de l'argon, qui arrive grâce à une canalisation 42 dans une chambre 43 à l'intérieur de laquelle le plateau 38 peut tourner : le gaz pénètre dans la rainure 37, ce qui assure l'entraînement de la poudre et son évacuation par le tuyau 41. Enfin, une conduite 44 permet une circulation de gaz le long du récipient 32, facilitant ainsi l'évacuation de la poudre.

Pour cette opération, le distributeur de poudre 16 est rempli de poudre de carbure de bore et l'on introduit de l'argon dans la chambre 43 pour entraîner la poudre dans le pistolet 10 qui est alimenté, par ailleurs, en hélium et en argon. Pour réaliser la projection, l'intensité d'alimentation de l'arc créée entre l'anode 45 et la cathode 48 est de 700 A, la distance entre le pistolet et la pièce est de 80 mm et la vitesse de déplacement en translation du pistolet est de 20 cm/min. Après l'opération de projection, on réalise immédiatement, comme précédemment, un refroidissement de la pièce revêtue. On obtient en fin d'opération un revêtement de carbure de bore de 1 mm d'épaisseur.

On mesure ensuite la résistance à l'arrachement en traction de la couche de carbure de bore ainsi déposée.

A titre de comparaison, on réalise dans les mêmes conditions, un revêtement de carbure de bore de 1 mm d'épaisseur sur des pièces en résine époxyde renforcée par des fibres de verre, qui n'ont pas subi le traitement de surface de l'invention. On mesure également la résistance à l'arrachement en traction de la couche de carbure de bore ainsi déposée. Les résultats obtenus avec les pièces traitées selon le procédé de l'invention et les pièces non traitées sont les suivants :

| Pièces traitées | Résistance à l'arrachement (en kg/cm$^2$) |
|---|---|
| ex. 1 | 46,4 |
| ex. 2 | 39,8 |
| ex. 3 | 38,2 |
| ex. 4 | 61,7 |

| Pièces non traitées | |
|---|---|
| ex. 1 | 7,5 |
| ex. 2 | 6,2 |
| ex. 3 | 5,4 |
| ex. 4 | 7,0 |

Ainsi, on constate que le traitement de surface de l'invention permet d'augmenter de façon importante l'adhérence du revêtement de carbure de bore.

De même pour un dépôt d'aluminium de 0,2 mm d'épaisseur réalisé à 600 A, on obtient :

| Pièces traitées | Résistance à l'arrachement (kg/cm$^2$) |
|---|---|
| ex. 5 | 15,5 |
| ex. 6 | 24,9 |
| ex. 7 | 32,0 |
| ex. 8 | 29,5 |

| Pièces non traitées | Résistance à l'arrachement (kg/cm$^2$) |
|---|---|
| ex. 5 | 7,5 |
| ex. 6 | 8,2 |
| ex. 7 | 7,7 |
| ex. 8 | 5,6 |

On décrit maintenant la fabrication de pièces en résine époxyde renforcée par des fibres de verre qui sont revêtues d'une couche de polycarbonate puis d'alumine conformément au procédé de l'invention.

Dans cet exemple, les pièces ont tout d'abord été soumises à un prétraitement comportant un microsablage, un dégraissage et un étuvage puis au dépôt d'une sous-couche de polycarbonate suivi d'un traitement par un plasma argon-hélium de la couche de polycarbonate ainsi déposée. Après ces différentes opérations, on a revêtu la pièce d'alumine par projection à chaud au pistolet à plasma.

**0 183 707**

Pour la réalisation du microsablage, on utilise des particules de corindon de 200 μm et on les projette sur la pièce sous une pression de 0,25 MPa. Après cette opération, on réalise un dégraissage de la pièce, qui comprend une première étape de lavage à l'eau permutée, une deuxième étape de lavage à l'acétone et une troisième étape de lavage à l'isopropanol. Dans ce but, on verse en continu de l'eau permutée sur la pièce qui est disposée horizontalement et entraînée en rotation à une vitesse d'environ 1 tour par minute, tout en la frottant vivement avec une brosse à poils de nylon. On réalise, ensuite le lavage à l'acétone dans les mêmes conditions puis on laisse sécher la pièce quelques minutes à l'air. Pour le lavage à l'isopropanol, on procède de la même manière, puis on rince la pièce avec de l'isopropanol et on la laisse égoutter quelques minutes. Après ces opérations de lavage, on introduit la pièce dans une étuve à 50 °C sous un vide d'environ 1,35 kPa, et on maintient la pièce dans l'étuve pendant 10 heures.

Après ces différentes opérations, on dépose sur la pièce une sous-couche de polycarbonate. Dans ce but, on lave tout d'abord la pièce avec du chloroforme et on la laisse sécher pendant une demi-heure. On prépare une solution de polycarbonate en dissolvant dans 1,5 l de chloroforme 150 g de polycarbonate qui ont été séchés préalablement pendant 4 heures à 135 °C. On projette ensuite cette solution sur la pièce au moyen d'un pistolet à air comprimé sous 0,1 MPa à une distance de 150 mm (distance de la buse du pistolet à la pièce), en opérant sous une hotte avec une bonne aspiration d'air. Pendant la projection, on fait tourner la pièce comme précédemment à une vitesse d'environ 1 tour par minute. On dépose 5 couches successives de polycarbonate afin d'obtenir une épaisseur totale d'environ 200 μm en attendant 2 minutes entre le dépôt de deux couches successives. On laisse ensuite la pièce en rotation sécher pendant environ 1 heure à la température ambiante. On la soumet ensuite à un étuvage pendant 12 heures à 50 °C sous un vide d'environ 1,33 kPa afin d'éliminer le chloroforme emprisonné dans la couche de polycarbonate.

On introduit ensuite la pièce dans une boîte à gant mise sous balayage d'argon pour réaliser le traitement de surface de la couche de polycarbonate au moyen d'un plasma d'arc gazeux. Ceci est effectué comme précédemment en utilisant les dispositifs représentés sur les figures 1 à 3.

Le traitement de surface par plasma de la pièce revêtue d'une couche de polycarbonate de 200 μm est réalisé dans les conditions suivantes :

— alimentation en mélange Argon-Hélium : 4 l d'argon sous une pression de 0,2 MPa pour 15 l d'hélium sous une pression de 0,2 MPa,
— intensité d'alimentation de l'arc créé entre l'anode 45 et la cathode 48 : 350 A,
— distance entre le pistolet 10 et la pièce 8 : 115 mm,
— vitesse de déplacement du pistolet 10 : 12 cm/min,
— vitesse de rotation de la pièce : 160 t/min.

Après le traitement de surface au plasma, on refroidit immédiatement la pièce 8 au moyen du système de refroidissement 18, et on réalise de nouveau six cycles complets comportant un traitement de surface au moyen du pistolet à plasma réalisé dans les mêmes conditions, suivi d'un refroidissement.

Après ce traitement, on forme un revêtement d'alumine $Al_2O_3$ sur la pièce par projection de poudre de $Al_2O_3$ au moyen d'un pistolet à plasma. On peut réaliser cette opération dans l'installation représentée sur la figure 1, à condition d'associer au pistolet 10 le distributeur de poudre 16 illustré en détail sur la figure 4.

Pour cette opération, le distributeur de poudre 16 est rempli de poudre d'alumine et l'on introduit de l'argon dans la chambre 43 pour entraîner la poudre dans le pistolet 10 qui est alimenté, par ailleurs, en hélium et en argon. Pour réaliser la projection, l'intensité d'alimentation de l'arc créée entre l'anode 45 et la cathode 48 est de 700 A, la distance entre le pistolet et la pièce est de 120 mm, la vitesse de déplacement en translation du pistolet est de 5 cm/min et la vitesse de rotation de la pièce de 200 t/min. Après l'opération de projection, on réalise immédiatement, comme précédemment, un refroidissement de la pièce revêtue. On obtient en fin d'opération un revêtement d'alumine de 0,5 mm d'épaisseur.

On mesure ensuite la résistance à l'arrachement en traction de la couche d'alumine ainsi déposée.

A titre de comparaison, on réalise dans les mêmes conditions, un revêtement d'alumine de 0,5 mm d'épaisseur sur des pièces analogues en résine époxyde renforcée par des fibres de verre, qui n'ont pas été revêtues d'une couche de polycarbonate. On mesure également la résistance à l'arrachement en traction de la couche d'alumine ainsi déposée. Les résultats obtenus avec les pièces traitées selon le procédé de l'invention et les pièces non traitées sont les suivants :

|  | Résistance à l'arrachement (en MPa) |
|---|---|
| Pièces traitées | 4,87 |
| Pièces non traitées | 0,5 |

On a réalisé dans les mêmes conditions des pièces en résine phénolique renforcée par des fibres de verre, revêtues d'une couche de polycarbonate de 200 μm et d'une couche d'alumine de 0,5 mm d'épaisseur, et on a mesuré également la résistance à l'arrachement en traction de la couche d'alumine ainsi déposée. A titre comparatif, on a effectué la même mesure sur des pièces identiques qui n'ont pas reçu une couche de polycarbonate. Les résultats obtenus sont les suivants :

pièces munies d'une couche de polycarbonate : 10,1 MPa

pièce ne comportant pas de couche de polycarbonate : 0,5 MPa.

**Revendications**

1. Procédé de revêtement d'une pièce en matériau sensible à la chaleur par projection à chaud de métal ou de matière céramique, caractérisé en ce que l'on soumet la surface de la pièce en atmosphère inerte à l'action d'un plasma d'arc gazeux chaud (10), on refroidit immédiatement la surface ainsi traitée en projetant sur celle-ci un gaz liquéfié sous forme de gouttelettes au moyen d'un gaz porteur, et on projette ensuite à chaud sur la pièce le métal ou la matière céramique.

2. Procédé de revêtement d'une pièce en matériau sensible à la chaleur par projection à chaud de métal ou de matière céramique, selon lequel on dépose tout d'abord sur la surface de la pièce une couche de résine, caractérisé en ce que la couche de résine est une couche de matière thermoplastique, en ce que l'on effectue sur la couche de matière thermoplastique ainsi déposée un traitement consistant à soumettre la surface de la couche en atmosphère inerte à l'action d'un plasma d'arc gazeux chaud (10) et à refroidir immédiatement la surface ainsi traitée en projetant sur celle-ci un gaz liquéfié sous forme de gouttelettes au moyen d'un gaz porteur, en ce que l'on projette ensuite à chaud le métal ou la matière céramique sur la surface de la pièce munie de la couche ainsi traitée et en ce que l'on refroidit immédiatement la surface de la pièce ainsi revêtue.

3. Procédé selon l'une quelconque des revendications 1 et 2, caractérisé en ce que le gaz du plasma est de l'azote, de l'argon, de l'hydrogène, de l'hélium ou un mélange de ceux-ci.

4. Procédé selon l'une quelconque des revendications 1 à 3, caractérisé en ce que le plasma comprend un gaz réactif.

5. Procédé selon la revendication 4, caractérisé en ce que le gaz réactif est de la vapeur d'eau ou du $BCl_3$.

6. Procédé selon la revendication 2, caractérisé en ce que l'on refroidit la surface de la pièce revêtue de métal ou de céramique en projetant sur celle-ci un gaz liquéfié sous forme de gouttelettes au moyen d'un gaz porteur.

7. Procédé selon la revendication 4, caractérisé en ce que la couche de matière thermoplastique a une épaisseur de 20 à 500 $\mu$m.

8. Procédé selon la revendication 2, caractérisé en ce que la matière thermoplastique est choisie dans le groupe comprenant le polystyrène, les polycarbonates, les polyéthers et les polyoléfines.

9. Procédé selon l'une quelconque des revendications 2 et 3, caractérisé en ce que le matériau sensible à la chaleur est une matière plastique renforcée par des fibres inorganiques.

10. Procédé selon la revendication 9, caractérisé en ce que les fibres inorganiques sont des fibres de verre, de carbone, de silice ou de graphite.

11. Procédé selon l'une quelconque des revendications 2 et 3, caractérisé en ce que le matériau sensible à la chaleur est une résine époxyde renforcée par des fibres de verre.

12. Procédé selon l'une quelconque des revendications 1 et 2, caractérisé en ce que la matière céramique est un matériau réfractaire choisi parmi les oxydes, les carbures, les siliciures, les nitrures et les borures.

13. Procédé selon la revendication 2, caractérisé en ce que l'on dépose la couche de matière thermoplastique en projetant sur la surface de la pièce une solution de la matière thermoplastique dans un solvant et en soumettant ensuite la couche ainsi déposée à un séchage pour éliminer le solvant.

14. Procédé selon l'une quelconque des revendications 1 et 2 caractérisé en ce que le gaz liquéfié est choisi dans le groupe comprenant l'azote et l'argon.

15. Procédé selon l'une quelconque des revendications 1 et 2, caractérisé en ce que l'on effectue un traitement de nettoyage de la pièce avant de la soumettre à l'action du plasma d'arc gazeux.

16. Procédé selon la revendication 15, caractérisé en ce que le traitement de nettoyage comprend un dégraissage et/ou un sablage.

17. Procédé selon la revendication 16, caractérisé en ce que le dégraissage est effectué au moyen d'un alcool.

18. Procédé selon la revendication 16, caractérisé en ce que le sablage est réalisé en projetant sur la pièce des particules de corindon.

19. Procédé selon l'une quelconque des revendications 1 et 2, caractérisé en ce que le plasma gazeux est un plasma d'argon et d'azote.

**Claims**

1. Process for coating a part made from a heat sensitive material by the hot spraying of metal or refractory material, characterized in that in an inert atmosphere the surface of the part is exposed to the action of a hot gaseous arc plasma (10), the thus treated surface is immediately cooled by projecting on to it a liquefied gas in the form of droplets by means of a carrier gas and the metal or ceramic material is then sprayed hot on to the part.

2. Process for coating a part made from a heat sensitive material by the hot spraying of metal or ceramic material, according to which on the surface of the part is firstly deposited a resin layer, characterized in that the resin layer is a thermoplastic material layer, in that on the thus deposited thermoplastic material layer is performed a treatment consisting of subjecting the surface of the layer to the action of a hot gaseous arc plasma (10) in an inert atmosphere and immediately cooling the thus treated surface by spraying on to it a liquefied gas in the form of droplets by means of a carrier gas, in that the metal or refractory material is then sprayed hot on to the surface of the part provided with the thus treated layer and in that the surface of the thus coated part is then immediately cooled.

3. Process according to either of the claims 1 and 2, characterized in that the gas of the plasma is nitrogen, argon, hydrogen, helium or a mixture thereof.

4. Process according to any one of the claims 1 to 3, characterized in that the plasma comprises a reactive gas.

5. Process according to claim 4, characterized in that the reactive gas is water vapour or $BCl_3$.

6. Process according to claim 2, characterized in that the surface of the metal or ceramic coated part is cooled by spraying on to it a liquefied gas in the form of droplets by means of a carrier gas.

7. Process according to claim 4, characterized in that the thermoplastic material layer has a thickness of 20 to 500 μm.

8. Process according to claim 2, characterized in that the thermoplastic material is chosen in the group including polystyrene, polycarbonates, polyethers and polyolefins.

9. Process according to either of the claims 2 and 3, characterized in that the heat sensitive material is a plastics material reinforced by inorganic fibres.

10. Process according to claim 9, characterized in that the inorganic fibres are glass, carbon, silica or graphite fibres.

11. Process according to either of the claims 2 and 3, characterized in that the heat sensitive material is an epoxy resin reinforced by glass fibres.

12. Process according to either of the claims 1 and 2, characterized in that the ceramic material is a refractory material chosen from among oxides, carbides, silicides, nitrides and borides.

13. Process according to claim 2, characterized in that the thermoplastic material layer is deposited by spraying on to the surface of the part a solution of the thermoplastic material in a solvent and then subjecting the thus deposited layer to drying in order to eliminate the solvent.

14. Process according to either of the claims 1 and 2, characterized in that the liquefied gas is chosen in the group including nitrogen and argon.

15. Process according to either of the claims 1 and 2, characterized in that the part undergoes a cleaning treatment prior to being subjected to the action of the gaseous arc plasma.

16. Process according to claim 15, characterized in that the cleaning treatment comprises a scouring and/or sandblasting.

17. Process according to claim 16, characterized in that scouring is performed by means of an alcohol.

18. Process according to claim 16, characterized in that sandblasting is carried out by projecting corundum particles on to the part.

19. Process according to either of the claims 1 and 2, characterized in that the gaseous plasma is an argon and nitrogen plasma.

**Patentansprüche**

1. Verfahren zum Überziehen eines Gegenstands aus einem wärmeempfindlichen Werkstoff mit einem Metall oder keramischen Material durch thermisches Spritzen, dadurch gekennzeichnet, daß man die Oberfläche des Gegenstands in einer inerten Atmosphäre der Wirkung eines heißen gasförmigen Lichtbogenplasmas (10) aussetzt, daß man die so behandelte Oberfläche unmittelbar darauf kühlt, indem man mit Hilfe eines Trägergases ein verflüssigtes Gas in Form von Tröpfchen aufsprüht, und daß man darauf das Metall oder keramische Material durch thermisches Spritzen auf den Gegenstand aufbringt.

2. Verfahren zum Überziehen eines Gegenstands aus einem wärmeempfindlichen Werkstoff mit einem Metall oder keramischen Material durch thermisches Spritzen, bei welchem auf der Oberfläche des Gegenstands zunächst eine Harzschicht deponiert wird, dadurch gekennzeichnet, daß die Harzschicht aus einem thermoplastischen Material gebildet wird, daß man die so deponierte Harzschicht einer Behandlung unterwirft, welche darin besteht, daß man die Oberfläche der Schicht in einer inerten Atmosphäre der Wirkung eines heißen, gasförmigen Lichtbogenplasmas (10) aussetzt und die so behandelte Oberläche unmittelbar darauf kühlt, indem man mit Hilfe eines Trägergases ein verflüssigtes Gas in Form von Tröpfchen aufsprüht, daß man anschließend das Metall oder keramische Material durch thermisches Spritzen auf die mit der so behandelten Schicht versehene Oberfläche des Gegenstands aufbringt und daß man die derart mit einem Überzug versehene Oberfläche des Gegenstands unmittelbar darauf abkühlt.

3. Verfahren nach einem der Ansprüche 1 und 2, dadurch gekennzeichnet, daß das für das Plasma verwendete Gas Stickstoff, Argon, Wasserstoff, Helium oder ein Gemisch dieser Gase ist.

4. Verfahren nach einem der Ansprüche 1 bis 3, dadurch gekennzeichnet, daß das Plasma ein reaktives Gas enthält.

5. Verfahren nach Anspruch 4, dadurch gekennzeichnet, daß das reaktive Gas Wasserdampf oder $BCl_3$ ist.

6. Verfahren nach Anspruch 2, dadurch gekennzeichnet, daß man die mit dem Metall oder keramischen Werkstoff überzogene Oberfläche des Gegenstands kühlt, indem man mit Hilfe eines Trägergases ein verflüssigtes Gas in Form von Tröpfchen aufsprüht.

7. Verfahren nach Anspruch 4, dadurch gekennzeichnet, daß die Schicht aus thermoplastischem Material eine Stärke von 20 bis 500 µm hat.

8. Verfahren nach Anspruch 2, dadurch gekennzeichnet, daß das thermoplastische Material aus der Polystyrol, Polycarbonate, Polyäther und Polyolefine umfassenden Gruppe gewählt ist.

9. Verfahren nach einem der Ansprüche 2 und 3, dadurch gekennzeichnet, daß der wärmeempfindliche Werkstoff ein mit anorganischen Fasern verstärktes plastisches Material ist.

10. Verfahren nach Anspruch 9, dadurch gekennzeichnet, daß die anorganischen Fasern Glas-, Kohlenstoff-, Silizium oder Grafitfasern sind.

11. Verfahren nach einem der Ansprüche 2 und 3, dadurch gekennzeichnet, daß der wärmeempfindliche Werkstoff ein mit Glasfasern verstärktes Epoxidharz ist.

12. Verfahren nach einem der Ansprüche 1 und 2, dadurch gekennzeichnet, daß das keramische Material ein aus der Oxide, Carbonate, Silikate, Nitrate und Borate umfassenden Gruppe gewähltes feuerfestes Material ist.

13. Verfahren nach Anspruch 2, dadurch gekennzeichnet, daß man die Schicht aus thermoplastischem Material deponiert, indem man eine Lösung des thermoplastischen Materials in einem Lösungsmittel auf die Oberfläche des Gegenstands aufsprüht und die so deponierte Schicht einer Trocknung zum Entfernen des Lösungsmittels unterwirft.

14. Verfahren nach einem der Ansprüche 1 und 2, dadurch gekennzeichnet, daß das verflüssigte Gas aus der Stickstoff und Argon umfassenden Gruppe gewählt ist.

15. Verfahren nach einem der Ansprüche 1 und 2, dadurch gekennzeichnet, daß man den Gegenstand einer reinigenden Behandlung unterwirft, bevor man ihn der Wirkung das gasförmigen Lichbogenplasmas aussetzt.

16. Verfahren nach Anspruch 15, dadurch gekennzeichnet, daß die reinigende Behandlung eine Entfettung und/oder Sandstrahlbehandlung umfaßt.

17. Verfahren nach Anspruch 16, dadurch gekennzeichnet, daß die Entfettung mittels eines Alkohols vorgenommen wird.

18. Verfahren nach Anspruch 16, dadurch gekennzeichnet, daß das Sandstrahlen ausgeführt wird, indem man den Gegenstand mit einem Strahl von Korundteilchen behandelt.

19. Verfahren nach einem der Ansprüche 1 und 2, dadurch gekennzeichnet, daß das gasförmige Plasma ein Plasma aus Argon und Stickstoff ist.

11

FIG.1

0 183 707

FIG. 2

FIG. 3

FIG.4